# EUROPÄISCHE PATENTANMELDUNG

(11) **EP 4 101 584 A1**
(43) Veröffentlichungstag der Anmeldung: **14.12.2022**
(21) Anmeldenummer: 22177228.8
(22) Anmeldetag: 03.06.2022
(51) Int. Cl.: B23Q 7/04, B23Q 17/24, B25J 9/16, B65G 47/90

(54) **VORRICHTUNG ZUM GREIFEN LÄNGLICHER BEFESTIGUNGSELEMENTE AUS EINEM UNGEORDNETEN LAGER**

(30) Priorität: 08.06.2021 DE 202021103093 U
(71) Anmelder: Dürr Assembly Products GmbH, 66346 Püttlingen (DE)
(72) Erfinder: Brach, Christian, 57200 Wiesviller (FR); Berry, Brian, 66119 Saarbrücken (DE); Kolb, Thomas, 66440 Blieskastel (DE)
(74) Vertreter: Patentanwaltskanzlei Vièl & Wieske PartGmbB

(57) **Zusammenfassung**

Die vorliegende Erfindung betrifft eine Vorrichtung zum Greifen länglicher Befestigungselemente aus einem ungeordneten Lager. Die Vorrichtung weist eine Greifvorrichtung mit zwei länglichen Greifelementen (1) auf, einen Betätigungsmechanismus zur automatisierten Betätigung der beiden Greifelemente (1), ein Kamerasystem, eine Einrichtung (309) zur Bildauswertung zur Erkennung der Position und Orientierung der länglichen Befestigungselemente in dem ungeordneten Lager, eine Regel- oder Steuereinrichtung mit Ansteuermitteln zur Ansteuerung einer Positioniereinheit für die Greifvorrichtung sowie Ansteuermitteln für den Betätigungsmechanismus zur automatischen Betätigung der beiden Greifelemente (1) zur Steuerung des Öffnens und Schließens der beiden Greifelemente (1) abhängig von der erkannten Position und Orientierung der länglichen Befestigungselemente in dem ungeordneten Lager. Die beiden Greifelemente (1) sind über den Betätigungsmechanismus öffnbar und schließbar. Die beiden Greifelemente weisen (1) jeweils einen Greifbereich (3) auf derart, dass diese beiden Greifbereiche (3) beim Schließen der beiden Greifelemente (1) aufeinander zu bewegt werden, so dass diese in der geschlossenen Stellung ein in dem Greifbereich (3) befindliches längliches Befestigungselement (4) kraftschlüssig greifen. Die beiden Greifelemente (1) weisen jeweils eine Abrückfläche (6) auf derart, dass durch die Berührungslinie des Greifbereiches (3) mit der Abrückfläche (6) die vordere Kante des Greifelementes (1) gebildet wird. Die beiden Greifelemente (1) sind weiterhin wie folgt geformt. Die Greifbereiche (3) weisen im Bereich des vorderen Endes des jeweiligen Greifelementes (1) eine halbrunde Ausnehmung (4) auf, wobei die Längsachse der halbrunden Ausnehmung (4) senkrecht zur Längsrichtung des Greifelementes (1) orientiert ist. Die Abrückfläche (6) verläuft ausgehend von der vorderen Kante des Greifelementes (1) stetig differenzierbar so, dass die Abrückfläche (6) von dem Greifbereich (3) des Greifelementes (1) weg geneigt ist.

## Beschreibung

Die vorliegende Erfindung betrifft eine Vorrichtung zum Greifen länglicher Befestigungselemente aus einem ungeordneten Lager nach dem Oberbegriff des Anspruchs 1.

Es sind bereits Werkzeugmagazine bekannt (DE 10 2009 016 372 A1, DE 10 2015 121 287 A1), in denen längliche Befestigungselemente sortiert und mit einer definierten Position und Ausrichtung gelagert werden für eine automatisierte Weiterverarbeitung. Die länglichen Befestigungselemente sind Schrauben, Bolzen oder Nieten. Diese werden mittels entsprechender Bearbeitungswerkzeuge aus der Position in dem Werkzeugmagazin direkt so geführt, dass diese länglichen Befestigungselemente dabei montiert werden.

Diese Werkzeugmagazine werden "von Hand" bestückt, indem die länglichen Befestigungselemente von einem Werker gegriffen und einzeln an der jeweiligen Aufnahmeposition mit der richtigen Orientierung in das Werkzeugmagazin eingesetzt werden.

Der vorliegenden Erfindung liegt die Aufgabe zu Grunde, die Bestückung eines Werkzeugmagazins zu vereinfachen.

Diese Aufgabe wird nach der vorliegenden Erfindung durch eine Vorrichtung gemäß Anspruch 1 gelöst. Die Vorrichtung weist eine Greifvorrichtung auf, die zwei längliche Greifelemente aufweist sowie einen ansteuerbaren Betätigungsmechanismus zum automatisierten Betätigen der beiden Greifelemente. Die beiden Greifelemente können somit im automatisierten Betrieb über den Betätigungsmechanismus geöffnet und geschlossen werden. Weiterhin weist die Vorrichtung ein Kamerasystem auf sowie eine Einrichtung zur Bildauswertung. Mit der Einrichtung zur Bildauswertung kann die Position und die Orientierung der länglichen Befestigungselemente in dem ungeordneten Lager erkannt werden. Die Vorrichtung weist weiterhin eine Regel- oder Steuereinrichtung auf mit Ansteuermitteln zur Ansteuerung einer Positioniereinheit für die Greifvorrichtung sowie Ansteuermitteln zur Steuerung des Öffnens und Schließens der beiden Greifelemente abhängig von der erkannten Position und Orientierung der länglichen Befestigungselemente. Die beiden Greifelemente weisen jeweils einen Greifbereich auf. Die Greifbereiche werden beim Schließen der beiden Greifelemente aufeinander zu bewegt, so dass diese in der geschlossenen Stellung ein in dem Greifbereich befindliches längliches Befestigungselement kraftschlüssig greifen,

Die beiden Greifelemente weisen außerdem jeweils eine Abrückfläche auf derart, dass durch die Berührungslinie des Greifbereichs mit der Abrückfläche die vordere Kante des Greifelementes gebildet wird. Die beiden Greifelemente sind weiterhin wie folgt geformt:
> Die Anlageflächen weisen im Bereich des vorderen Endes des jeweiligen Greifelementes eine halbrunde Ausnehmung auf, wobei die Längsachse der halbrunden Ausnehmung senkrecht zur Längsrichtung des Greifelementes orientiert ist.
> Die Abrückfläche verläuft ausgehend von der vorderen Kante des Greifelementes stetig differenzierbar so, dass die Abrückfläche von dem Greifbereich des Greifelementes weg geneigt ist.

Durch diese Ausgestaltung ergeben sich einige Vorteile. Ein Vorteil besteht darin, dass eine Bestückung des Werkzeugmagazins im automatisierten Betrieb mit einer ausreichend kurzen Taktzeit erreichbar wird. Die kurze Taktzeit wird wesentlich dadurch bedingt, dass mit der Greifvorrichtung bei einem Greifvorgang mit einer hohen Sicherheit genau eines der länglichen Befestigungselemente gegriffen wird. Außerdem wird dieses längliche Befestigungselement in einer definierten Position und Ausrichtung relativ zu den beiden Greifelementen gegriffen. Dies ermöglicht ein schnelles und sicheres Absetzen in dem Werkzeugmagazin an der richtigen Position und mit der Richtung Orientierung.

Das Öffnen und Schließen der beiden Greifelemente kann realisiert sein, indem die beiden Greifelemente mit einer Linearbewegung im Sinne einer Parallelverschiebung voneinander weg bzw. aufeinander zu bewegt werden. Anstelle dieser Linearbewegung kann das Öffnen und Schließen der beiden Greifelemente auch mit einer zangenartigen Bewegung im Sinne der Drehbewegung der Zangenarme beim Öffnen und Schließen realisiert sein.

Das Zusammenwirken der Merkmale des Anspruchs 1 lässt sich wie folgt erklären. Durch das Kamerasystem und die Einrichtung zur Bildauswertung werden die Position und die Orientierung der länglichen Befestigungselemente in dem ungeordneten Lager erkannt. Abhängig hiervon werden die Regel- oder Steuereinrichtung mit den Ansteuermitteln für die Positionierung der Greifvorrichtung sowie der ansteuerbare Betätigungsmechanismus für das Öffnen und Schließen der beiden Greifelemente angesteuert. Dies bedeutet, dass die Greifvorrichtung schnell ausgerichtet wird zum Greifen eines länglichen Befestigungselementes.

Die Ansteuerung erfolgt dabei vorteilhaft so, dass nicht nur die Position und Orientierung der länglichen Befestigungselemente erkannt wird. Vorteilhaft erfolgt dabei gleich eine Bewertung, welches der länglichen Befestigungselemente ausreichend frei liegt, damit dieses längliche Befestigungselement gegriffen werden kann. Zu diesem länglichen Befestigungselement wird die Greifvorrichtung dann positioniert.

Wenn hierbei erkannt wird, dass die länglichen Befestigungselemente in dem ungeordneten Lager so liegen, dass diese verkantet sind und dass es damit problematisch ist, diese im automatisierten Betrieb einzeln zu greifen, kann von der Einrichtung zur Bildauswertung ein "Verkantungssignal" gesendet werden. Abhängig von diesem Verkantungssignal wird dann eine Durchmischungseinrichtung gestartet. Die Durchmischungseinrichtung kann beispielsweise ein Rührarm sein, der das ungeordnete Lager durchrührt, um dieses Verkanten der länglichen Befestigungselemente zu lösen. Alternativ zu dem Rührarm könnte das ungeordnete Lager (Lagerbox) auch geschüttelt werden. Dabei kann allerdings das Problem auftreten, dass sich die länglichen Befestigungselemente weiter "setzen" und weiter verkanten. Es ist auch möglich, die als Durchmischungseinrichtung einen ein- und ausschaltbaren Elektromagneten oberhalb des Lagerbehälters der länglichen Befestigungselemente zu positionieren. Wenn der Elektromagnet eingeschaltet wird, werden die länglichen Befestigungselemente aus dem Lagerbehälter angehoben. Nach dem Ausschalten des Elektromagneten fallen die länglichen Befestigungselemente wieder in den Lagerbehälter. Auch dadurch lässt sich eine Verkantung der länglichen Befestigungselemente lösen.

Die beiden Greifelemente der Greifvorrichtung werden vor einem "Eintauchen" in das ungeordnete Lager so weit geöffnet, dass das längliche Befestigungselement zwischen die beiden Greifelemente passt, wenn die beiden Greifelemente über das Befestigungselement geschoben werden. Dieses "Eintauchen" bedeutet nicht zwingend, dass das Greifelement von oben mit nach unten zeigenden Greifelementen bewegt wird. Abhängig von der vorab erkannten Position und Orientierung der länglichen Befestigungselemente kann es auch sinnvoll sein, die beiden Greifelemente im Wesentlichen horizontal auszurichten (dabei ggf. etwas nach unten gerichtet) und diese mit einer Bewegung in horizontaler Richtung über das zu greifende längliche Befestigungselement zu schieben. Ein solcher Bewegungsablauf kann sinnvoll sein, wenn das zu greifende längliche Befestigungselement so in dem ungeordneten Lager liegt, dass dessen Längsachse im Wesentlichen vertikal orientiert ist. Es kann besonders dann, wenn das zu greifende längliche Befestigungselement im Wesentlichen senkrecht im ungeordneten Lager liegt, auch ein Bewegungsablauf sinnvoll sein, bei dem die Greifvorrichtung so über dem zu greifenden länglichen Befestigungselement ausgerichtet wird, dass sich die halbrunden Ausnehmungen der beiden Greifelemente gerade über dem länglichen Befestigungselement befinden. Durch ein Absenden der Greifvorrichtung bei geöffneten Greifelementen mit einem Schließen der beiden Greifelemente dann, wenn sich das zu greifende längliche Befestigungselement zwischen den beiden Greifelementen befindet, kann das zu greifende längliche Befestigungselement gegriffen werden.

Die Bewegungsrichtung des Greifelementes hängt somit von der Orientierung des länglichen Befestigungselementes ab, das gegriffen werden soll. Die Greifvorrichtung wird geschlossen, wenn sich das längliche Befestigungselement im Bereich der halbrunden Ausnehmungen der beiden Greifelemente befindet.

Durch die Gestaltung des Greifbereiches der beiden Greifelemente wird vorteilhaft erreicht, dass nur selten mehrere längliche Befestigungselemente gleichzeitig gegriffen werden. Wenn die Greifvorrichtung gerade so weit geöffnet wird, dass das zu greifende längliche Befestigungselement zwischen die beiden Greifelemente passt, wird weitgehend vermieden, dass sich noch weitere längliche Befestigungselemente zwischen die beiden Greifelemente schieben, bevor die Greifvorrichtung geschlossen wird.

Die Greifelemente weisen außer dem Greifbereich noch eine Abrückfläche auf. Diese bildet am vorderen Ende des jeweiligen Greifelementes eine Kante, indem diese Abrückfläche dort mit dem Greifbereich zusammentrifft.

Durch die halbrunde Ausnehmung in den Greifelementen (die bei zusammenmontierter Greifvorrichtung einander gegenüberliegen) ergibt sich eine Sollposition für das zu greifende längliche Befestigungselement. Diese Sollposition ist beim Greifen sowohl hinsichtlich der Position des länglichen Befestigungselementes in der Greifvorrichtung als auch hinsichtlich der Orientierung des zu greifenden länglichen Befestigungselementes relativ zur Orientierung der Greifelemente definiert. Dadurch kann das längliche Befestigungselement in einfacher Weise an die vorgesehene Position und mit der vorgegebenen Orientierung in das Werkzeugmagazin eingelegt werden. Beim Schließen der Greifvorrichtung ist das längliche Befestigungselement so orientiert, dass dessen Längsrichtung orientiert ist zu der Längsrichtung der beiden Greifelemente.

Durch das Kamerasystem und die Einrichtung zur Bildauswertung wird erfasst, ob das längliche Befestigungselement relativ zur momentanen Orientierung des Greifelementes richtig orientiert ist. Ist das längliche Befestigungselement beispielsweise eine Schraube, deren Kopf oben ist, muss die Greifvorrichtung zunächst noch um 180 Grad um deren Längsachse gedreht werden, damit die Schraube mit der richtigen Orientierung in das Werkzeugmagazin eingesetzt wird.

Die halbrunde Ausnehmung in den Greifelementen dient somit nicht nur dazu, zu vermeiden, dass mehrere längliche Befestigungselemente gleichzeitig gegriffen werden. Durch diese halbrunden Ausnehmungen in den beiden Greifelementen hat das längliche Befestigungselement beim Zugreifen auch eine gut definierte Ausrichtung relativ zu der Greifvorrichtung. Dies erleichtert das Einsetzen in das Werkzeugmagazin.

Der stetig differenzierbare Verlauf der Abrückfläche von der vorderen Kante des Greifelementes aus bringt den Vorteil mit sich, dass bei einem "Eintauchen" der Greifvorrichtung in das ungeordnete Lager der länglichen Befestigungselemente in Längsrichtung der Greifelemente längliche Befestigungselemente, die neben dem zu greifenden länglichen Befestigungselement liegen, zur Seite weggeschoben werden und damit den Greifvorgang nicht stören. Wenn der Verlauf der Abrückfläche nicht stetig differenzierbar wäre, könnte sich durch den "Sprung" im Verlauf der Fläche ein längliches Befestigungselement verhaken.

Die beiden Greifelemente können vorteilhaft in dem Greifbereich zusätzlich noch eine Anti-Rutsch-Ausführung aufweisen. Beispielsweise kann die Oberfläche der Greifelemente in den Greifbereichen mit einer Profilierung versehen sein und/oder eine Beschichtung aufweisen. Die Profilierung der Oberfläche kann beispielsweise darin bestehen, dass in dem Greifbereich parallel verlaufende Linien oder ein Gittermuster in die Oberfläche eingraviert wird. Die Beschichtung kann darin bestehen, dass in dem Greifbereich ein Material auf die Oberfläche aufgebracht wird, das einen hohen Reibungskoeffizienten µ hat. Ein solches Material kann beispielsweise Gummi sein. Es ist auch möglich, ein entsprechendes Material aufzubringen und die Oberfläche des Materials mit der Profilierung zu versehen.

Bei der Ausgestaltung der Vorrichtung nach Anspruch 2 weist der Greifbereich der beiden Greifelemente weiterhin eine halbrunde Ausnehmung auf, deren Längsachse parallel zur Längsrichtung des Greifelementes orientiert ist.

Diese Ausnehmung nach Anspruch 2 schneidet die Ausnehmung gemäß der Beschreibung des Anspruchs 1 in einem rechten Winkel. Es handelt sich somit um zwei Halbzylinder, die ineinander liegen.

Die Greifvorrichtung kann bei dieser Ausgestaltung so bewegt werden, dass ein zu greifendes längliches Befestigungselement derart zwischen die beiden Greifelemente eingeschoben wird, dass die Greifvorrichtung und damit auch die beiden Greifelemente in deren Längsrichtung über das längliche Befestigungselement geschoben wird. Wenn die beiden Greifelemente weit genug über das längliche Befestigungselement geschoben sind, können die beiden Greifelemente geschlossen werden.

Damit besteht eine alternative Möglichkeit für die Längsrichtung der beiden Greifelemente relativ zur Längsrichtung der länglichen Befestigungselemente, um ein längliches Befestigungselement mit den Greifelementen greifen zu können. Bei dem Greifvorgang entsprechend der Darstellung nach Anspruch 1 wird die im Anspruch 1 beschriebene Ausnehmung zum Greifen des länglichen Befestigungselementes genutzt. Bei einem Greifvorgang, bei dem die Längsrichtungen der beiden Greifelemente der Greifvorrichtung und die Längsrichtung des länglichen Befestigungselementes übereinstimmen, wenn die Greifvorrichtung über das längliche Befestigungselement geführt wird, wird die im Anspruch 2 erläuterte Ausnehmung genutzt.

Bei der Ausgestaltung nach Anspruch 3 ist der stetig differenzierbare Verlauf der Abrückfläche konvex bei einer Draufsicht auf die Abrückfläche.

Es hat sich gezeigt, dass mit dieser Form und diesem Verlauf der Abrückfläche der im Zusammenhang mit Anspruch 1 bereits unter dem Aspekt des stetig differenzierbaren Verlaufs der Abrückfläche beschriebene Effekt des Verschiebens benachbarter länglicher Befestigungselemente beim Greifen eines bestimmten länglichen Befestigungselementes besonders gut erreicht wird.

Gleichzeitig wird dadurch eine große Zunahme der Dicke des Greifelementes ausgehend von der vorderen Kante erreicht. Dadurch kann vorteilhaft die runde Ausnehmung in dem Greifbereich gemäß Anspruch 1 dicht an der vorderen Kante des Greifelementes angeordnet werden.

Bei der Ausgestaltung der Vorrichtung nach Anspruch 4 weist die Vorrichtung weiterhin eine Durchmischungseinrichtung auf zur Ausführung eines Mischungsvorgangs in dem ungeordneten Lager der länglichen Befestigungselemente.

Es wird an dieser Stelle ausdrücklich darauf verwiesen, dass eine solche Durchmischungseinrichtung auch dann sinnvoll eingesetzt werden kann, wenn die länglichen Befestigungselemente mit einer anders ausgestalteten Greifvorrichtung gegriffen werden sollen. Es geht bei der Durchmischungseinrichtung darum, Verkantungen der länglichen Befestigungselemente in dem ungeordneten Lager / Vorratsbehälter zu lösen. Es ist offensichtlich, dass diese Maßnahme unabhängig davon ist, wie die länglichen Befestigungselemente nachfolgend von einer Greifvorrichtung gegriffen werden. Es wird deswegen vorbehalten, eine Teilanmeldung mit einer Anspruchsfassung einzureichen, die allein auf die Durchmischungseinrichtung abgestellt ist (d.h. unabhängig von der Greifvorrichtung im Übrigen), sowie einen entsprechenden Verfahrensanspruch, der den Betrieb dieser Durchmischungseinrichtung betrifft.

Die Durchmischungseinrichtung kann beispielsweise in bestimmten Zeitintervallen in Gang gesetzt werden, um die länglichen Befestigungselemente in dem Vorratsbehälter zu durchmischen. Die Durchmischungseinrichtung kann auch entsprechend Anspruch 5 in Gang gesetzt werden abhängig von einem Steuersignal der Einrichtung zur Bildauswertung, wenn sich aus der Bildauswertung ergibt, dass eine Verkantung der länglichen Befestigungselemente in dem ungeordneten Lager besteht. Die Durchmischungseinrichtung kann beispielsweise auch in Gang gesetzt werden, wenn die Greifvorrichtung nach Beginn eines Greifvorgangs bis zum Greifen eines länglichen Befestigungselementes eine Zeitdauer benötigt, die oberhalb eines Schwellwertes liegt. Auch das Erkennen einer solchen Zeitdauer kann ein Maß dafür sein, dass eine Durchmischung des ungeordneten Lagers der länglichen Befestigungselemente sinnvoll ist.

Die Durchmischungseinrichtung kann beispielsweise aus einem Elektromagneten bestehen. Dieser Elektromagnet ist ein- und ausschaltbar. Außerdem ist der Elektromagnet so bewegbar, dass sich dieser in einer Ruheposition seitlich oder unterhalb des ungeordneten Lagers befindet. Von dort aus ist der Elektromagnet in eine Arbeitsposition bewegbar, in der der Elektromagnet oberhalb des ungeordneten Lagers angeordnet ist. In der Ruheposition ist der Elektromagnet so positioniert, dass Bewegungen der Greifvorrichtung bei der Handhabung der länglichen Befestigungselemente nicht behindert werden.

Wenn ein Durchmischungsvorgang erfolgen soll, wird der Elektromagnet aus der Ruheposition in die Arbeitsposition bewegt. In der Arbeitsposition wird der Elektromagnet eingeschaltet. Dadurch werden die länglichen Befestigungselemente in dem ungeordneten Lager durch den Elektromagneten angezogen und aus dem ungeordneten Lager angehoben. Daran anschließend wird der Elektromagnet wieder ausgeschaltet. Die länglichen Befestigungselemente fallen dann von dem Elektromagneten wieder (mit einer "neuen" Anordnung) in das ungeordnete Lager. Statistisch haben die länglichen Befestigungselemente dann eine geringere Ordnung in dem ungeordneten Lager als vorher und lassen sich deswegen besser einzeln greifen. Der Elektromagnet wird wieder in seine Ruheposition bewegt.

Der Übergang von der Ruheposition in die Arbeitsposition und umgekehrt kann durch eine kreisbogenförmige Bewegung des Elektromagneten realisiert werden oder auch durch eine Linearverschiebung des Elektromagneten.

Alternativ zu dem Elektromagneten ist auch eine andere Ausgestaltung der Durchmischungseinrichtung möglich.

Die Durchmischungseinrichtung kann beispielsweise eine Rütteleinrichtung sein. Vorteilhaft bewirkt diese Rütteleinrichtung nicht nur eine Schüttelbewegung in horizontaler Richtung, sondern auch in vertikaler Richtung. Bei einer Schüttelbewegung nur in horizontaler Richtung könnte es passieren, dass sich die Verkantung der länglichen Befestigungselemente noch verstärkt. Wenn die Rüttelbewegung erfolgt, indem das ungeordnete Lager beispielsweise ruckartig in vertikaler Richtung bewegt wird, werden die länglichen Befestigungselemente so durchgeschüttelt, dass sich Verkantungen zwischen diesen länglichen Befestigungselementen lösen. Die länglichen Befestigungselemente liegen nach dem Schüttelvorgang in einer neuen Anordnung in dem ungeordneten Lager. Für diese Durchmischungseinrichtung besteht das ungeordnete Lager beispielsweise aus einem Korb, der auf einer geeigneten Rüttelplatte abgestellt wird. Über die Bewegung der Rüttelplatte kann die Bewegung der länglichen Befestigungselemente in dem ungeordneten Lager im Sinne einer Durchmischung ausgelöst werden.

Eine weitere alternative Ausgestaltung einer Durchmischungseinrichtung besteht beispielsweise in einem Rührarm. Ein solcher Rührarm weist wiederum eine Ruheposition auf und eine Arbeitsposition. Wichtig ist auch hier, dass der Rührarm in seiner Ruheposition die Bewegungsabläufe der Greifvorrichtung nicht behindert. In seiner Arbeitsposition taucht der Rührarm in das ungeordnete Lager ein. Durch eine Bewegung des Rührarms in dem ungeordneten Lager erfolgt die Durchmischung. Die Bewegung des Rührarms zur Ausführung des Mischvorgangs kann eine Längsbewegung sein, eine kreisförmige Bewegung oder auch eine Kippbewegung. Der Rührarm kann aus der Ruheposition in die Arbeitsposition gebracht werden mittels einer Linearbewegung, oder mittels einer Kippbewegung. Entsprechend wird der Rührarm auch wieder aus der Arbeitsposition in die Ruheposition bewegt.

Nach dem Durchmischen können vorteilhaft die verbliebenen länglichen Befestigungselemente mit einer geringeren Fehleranfälligkeit gegriffen werden.

Bei der Ausgestaltung nach Anspruch 5 ist die Durchmischungseinrichtung von einem Steuersignal zur Einrichtung der Bildauswertung ansteuerbar.

Durch das Kamerasystem und die Einrichtung zur Bildauswertung kann erkannt werden, ob die länglichen Befestigungselemente in dem ungeordneten Lager stark verkantet liegen. Ebenso kann erkannt werden, ob die länglichen Befestigungselemente u.U, in einer ungünstigen Anordnung zueinander liegen, so dass diese nur schlecht mit der Greifvorrichtung gegriffen werden können. Auch in diesem Fall - bei dem nicht unbedingt eine Verkantung der länglichen Befestigungselemente vorliegen muss - kann es sinnvoll sein, eine Durchmischung durchzuführen. Diese Bewertung kann durch das Steuersignal zur Ausführung eines Mischungsvorgangs erfolgen. Die Durchmischungseinrichtung wird abhängig von dem Steuersignal zur Ausführung eines Mischungsvorgangs im Sinne einer Durchmischung des Vorratsraums angesteuert

Ein Verfahren zum Positionieren eines länglichen Befestigungselementes in einem Werkzeugmagazin zur automatisierten Weiterverarbeitung kann vorteilhaft mit einer der vorstehend beschriebenen Vorrichtungen wie folgt ausgeführt werden:
> In einem ersten Schritt wird ein längliches Befestigungselement mit einer der beschriebenen Vorrichtungen aus einem Vorratsraum gegriffen, in dem mehrere der länglichen Befestigungselemente ungeordnet gelagert sind. Dies kann mit einem der Bewegungsabläufe erfolgen, die vorstehend beschrieben worden sind. Die Definition eines geeigneten Bewegungsablaufes erfolgt auf der Grundlage der erkannten Position und Orientierung der länglichen Befestigungselemente durch die Einrichtung zur Bildauswertung. Möglichkeiten der Definition entsprechender Bewegungsabläufe aufgrund der erkannten Position und Orientierung der länglichen Befestigungselemente sind vorstehend erläutert.
> In einem zweiten Schritt wird das längliche Befestigungselement aus dem Vorratsraum herausgehoben durch ein Anheben des Greifelementes.
> In einem dritten Schritt wird das längliche Befestigungselement - soweit erforderlich - durch eine Drehung der Greifvorrichtung um deren Längsachse sowie zeitlich parallel oder nahfolgend hierzu durch eine Positionierung der Greifvorrichtung relativ zur Aufnahmeposition des länglichen Befestigungselementes im Werkzeugmagazin ausgerichtet.
> In einem vierten Schritt wird die Greifvorrichtung geöffnet.

In einer weiteren Ausgestaltung des Verfahrens kann durch das Kamerasystem und die Einrichtung zur Bildauswertung erkannt werden, ob die länglichen Befestigungselemente in dem ungeordneten Lager stark verkantet liegen. Diese Bewertung kann durch ein Steuersignal zur Auslösung eines Durchmischungsvorgangs erfolgen. Die Vorrichtung weist hierbei vorteilhaft eine Durchmischungseinrichtung auf, die abhängig von dem Steuersignal im Sinne einer Durchmischung des Vorratsraums ansteuerbar ist.

Nach dem Durchmischen können vorteilhaft die verbliebenen länglichen Befestigungselemente mit einer geringeren Fehleranfälligkeit gegriffen werden.

Ein Ausführungsbeispiel der Erfindung ist in der Zeichnung dargestellt. Es zeigt dabei:
- Fig. 1:: ein erstes Ausführungsbeispiel eines Greifelementes,
- Fig. 2:: ein weiteres Ausführungsbeispiel eines Greifelementes,
- Fig. 3:: eine Durchmischungseinrichtung in ihrer Arbeitsposition mit einem Mechanismus zur Bewegung der Durchmischungseinrichtung von der Arbeitsposition in die Ruheposition und
- Fig.4:: eine Darstellung der Durchmischungseinrichtung in ihrer Ruheposition.

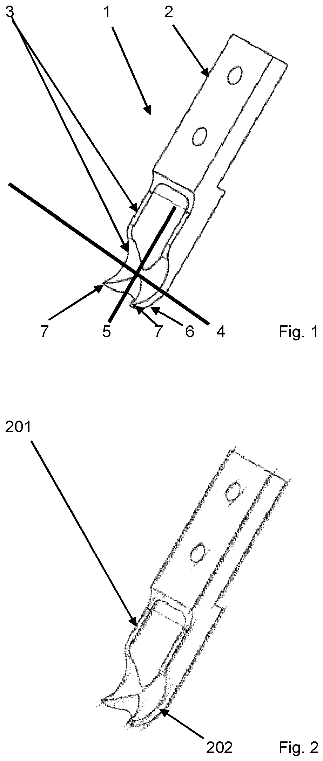

Figur 1 zeigt ein erstes Ausführungsbeispiel eines Greifelementes 1. Dieses Greifelement 1 weist in einem Montagebereich 2 zwei Bohrungen auf, die nicht mit Bezugszeichen versehen sind. Mittels dieser Bohrungen wird das Greifelement 1 an einem Halteelement befestigt. Das Halteelement ist antreibbar, so dass über eine Bewegung des Halteelementes auch das damit verbundene Greifelement 1 bewegt wird.

Mit der Bezugsziffer 3 ist ein Greifbereich 3 des Greifelementes 1 bezeichnet. In diesem Greifbereich 3 sind in der dargestellten Ausführungsform zwei halbrunde Ausnehmungen 4 und 5 dargestellt.

Die Längsachse der halbrunden Ausnehmung 4 ist senkrecht orientiert zur Längsachse des Greifelementes 1. In der Ausnehmung 4 ist eine schwarze Linie eingezeichnet, die die Richtung eines länglichen Befestigungselementes symbolisiert, das gegriffen wird, indem dieses längliche Befestigungselement in der halbrunden Ausnehmung 4 einliegt.

Die Längsachse der halbrunden Ausnehmung 5 ist parallel orientiert zur Längsachse des Greifelementes 1. In der Ausnehmung 5 ist ebenfalls eine schwarze Linie eingezeichnet, die die Richtung eines länglichen Befestigungselementes symbolisiert, das gegriffen wird, indem dieses längliche Befestigungselement in der halbrunden Ausnehmung 5 einliegt.

Es ist zu sehen, dass sich diese beiden halbrunden Ausnehmungen kreuzen. Dadurch entstehen die Spitzen 7 an dem unteren Ende des Greifelementes 1. Die Verbindungslinie dieser beiden Spitzen 8 bildet die untere Kante des Greifelementes 1.

Es ist zu sehen, dass ausgehend von dieser unteren Kante 7 noch eine Abrückfläche 6 verläuft. Diese Abrückfläche 6 ist stetig differenzierbar und verläuft so, dass sie ausgehend von der unteren Kante des Greifelementes 1 von dem Greifbereich 3 weg orientiert ist. Durch diesen Verlauf der Abrückfläche 6 wird erreicht, dass längliche Befestigungselemente, die benachbart liegen zu dem zu greifenden länglichen Befestigungselemente zur Seite weggeschoben werden. In einer Draufsicht auf die Abrückfläche 6 ist diese konvex gekrümmt.

Eine Greifvorrichtung weist zwei der Greifelemente 1 nach der Darstellung der Figur 1 auf. Diese sind zueinander so angeordnet, dass die beiden Greifbereiche 3 zusammenwirken, wenn die beiden Greifelemente aufeinander zu bewegt werden. Dies erfolgt mit der Ansteuerung des Betätigungsmechanismus zum Öffnen und Schließen der beiden Greifelemente 1. Die Linien 4 und 5 in der Darstellung der Figur 1 sind nur symbolische Darstellungen der Orientierung der jeweiligen Befestigungselemente, wenn diese gegriffen werden. Die länglichen Befestigungselemente sind in den Bereichen, in denen diese gegriffen werden, zylinderförmig. Die Befestigungselemente haben einen solchen Radius, dass die halbrunden Ausnehmungen 4, 5 in den Greifelementen 1 so weit ausgefüllt werden, dass die länglichen Befestigungselemente bei einem Zusammenschieben der beiden miteinander korrespondierenden Greifelemente 1 in einer Richtung, in Richtung der Flächennormalen zu den Greifbereichen 3, kraftschlüssig gegriffen werden.

Nachdem ein längliches Befestigungselement gegriffen wurde, kann die aus den beiden korrespondierenden Greifelementen 1 bestehende Greifvorrichtung mit der Positioniereinheit für die Greifvorrichtung so bewegt werden, dass das längliche Befestigungselement zu einem Aufnahmeplatz in einem Aufnahmemagazin für mehrere der Befestigungselemente bewegt wird, so dass bei einem Öffnen der Greifvorrichtung das längliche Befestigungselement an dem entsprechenden Aufnahmeplatz in dem Aufnahmemagazin abgelegt wird.

Figur 2 zeigt ein weiteres Ausführungsbeispiel eines Greifelementes 1. Dieses Greifelement 1 ist im Wesentlichen genauso aufgebaut wie das Greifelement in der Darstellung der Figur 1. Es ist zu sehen, dass in dem Greifbereich 3 in der Ausnehmung 4 eine Profilierung 202 der Oberfläche vorgenommen wurde. Ebenso wurde in der Ausnehmung 5 eine Profilierung 201 der Oberfläche vorgenommen.

Dadurch wird das Greifen eines Befestigungselementes vorteilhaft verbessert. In der Darstellung der Figur 2 ist nur zu sehen, dass die Kanten profiliert sind. Es können auch die Flächen in dem Greifbereich 3 insgesamt profiliert sein. Entsprechend der vorstehenden Erläuterungen kann in diesem Bereich auch eine Beschichtung vorgesehen sein.

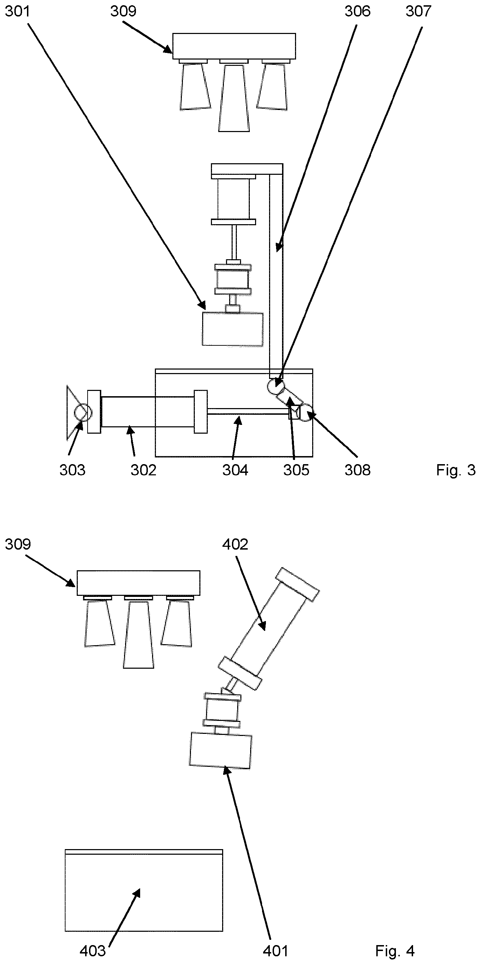

Figur 3 zeigt eine Durchmischungseinrichtung 301 in ihrer Arbeitsposition mit einem Mechanismus zur Bewegung der Durchmischungseinrichtung 301 von der Arbeitsposition in die Ruheposition.

Der Mechanismus zur Bewegung der Durchmischungseinrichtung 301 von der Arbeitsposition in die Ruheposition besteht aus einem Hydraulik- oder Pneumatikzylinder 302, der an seinem einen Ende drehbeweglich gelagert ist (303). Die Kolbenstange 304 ist in der dargestellten Position ausgefahren. Es ist ein Hebelsystem 305, 306 zu sehen, das in dem Punkt 307 drehbeweglich gelagert ist. Die beiden Stangen 305 und 306 des Hebelsystems sind zueinander fest angebracht, so dass sich der Winkel zwischen den Stangen 305 und 306 nicht ändert. Wird der Zylinder 302 so angesteuert, dass die Kolbenstange 304 eingefahren wird, ändert sich die Lage der Stange 305, weil das Ende der Kolbenstange 304 in dem Punkt 308 drehbeweglich an der Stange 305 angelenkt ist. Beim Einfahren der Kolbenstange 304 vollzieht die Stange 305 eine Kreisbewegung um den Drehpunkt 307. Der Kolben 302 folgt mit seiner Orientierung dieser Drehbewegung durch die drehbewegliche Lagerung 303. Weil der Winkel zwischen den Stangen 305 und 306 fest ist, wird somit die ganze Einheit mitsamt der Durchmischungseinrichtung 301 um den Drehpunkt 307 nach rechts weggekippt. Wenn die Durchmischungseinrichtung 301 ganz weggekippt ist, befindet sich die Durchmischungseinrichtung 301 in ihrer Ruheposition. Die Greifvorrichtung hat dann ungehinderten und freien Zugang zu dem Vorratsbehälter für die länglichen Befestigungselemente.

Die Durchmischungseinrichtung 301 ist in dem darrgestellten Ausführungsbeispiel ein Elektromagnet. Beim Einschalten des Elektromagneten werden die länglichen Befestigungselemente angezogen und aus dem Vorratsbehälter herausgehoben. Nach dem Ausschalten des Elektromagneten fallen die Befestigungselemente wieder in den Vorratsbehälter. Die Befestigungselemente liegen dann mit einer anderen Anordnung zueinander in dem Vorratsbehälter als vor dem Herausheben mittels des Elektromagneten.

In der Darstellung der Figur 3 ist noch ein Kamerasystem 309 zu sehen- Mit diesem Kamerasystem wird der Vorratsbehälter der Befestigungselemente erfasst. Die Bilder der Kameras können bewertet werden zur Positionierung einer Greifvorrichtung zum Greifen eines bestimmten länglichen Befestigungselementes aus dem Vorratsbehälter. Ebenso können die Bilder der Kameras bewertet werden. Diese Bewertung kann ein Kriterium umfassen, ob die länglichen Befestigungselemente zueinander verkantet sind. Ebenso kann die Bewertung umfassen, ob die Befestigungselemente so zueinander liegen, dass ein vergleichsweise aufwendiger Bewegungsablauf umzusetzen ist, um ein einzelnen Befestigungselement greifen zu können. Abhängig von diesem Kriterium kann ein Durchmischungsvorgang gestartet werden.

Dazu wird zunächst die Durchmischungseinrichtung in die Arbeitsposition bewegt. Dann wird der Elektromagnet eingeschaltet, um die Befestigungselemente aus dem Vorratsbehälter zu heben. Daran anschließend wird der Elektromagnet wieder abgeschaltet, so dass die Befestigungselemente wieder in den Vorratsbehälter fallen. Daran anschließend wird die Durchmischungseinrichtung wieder in ihre Ruheposition bewegt.

Figur 4 zeigt eine Darstellung der Durchmischungseinrichtung 401 in ihrer Ruheposition. Es ist ein Hydraulik- oder Pneumatikzylinder 402 zu sehen, bei dem die Kolbenstange eingefahren ist.

Um die Durchmischungseinrichtung 401 in die Arbeitsposition zu bringen, wird die Kolbenstange des Zylinders 402 ausgefahren. Durch diese Linearbewegung wird die Durchmischungseinrichtung 401 schräg nach unten abgesenkt. Wenn sich die Durchmischungseinrichtung oberhalb des Vorratsbehälters 403 befindet, hat die Durchmischungseinrichtung 401 die Arbeitsposition erreicht.

Die Durchmischungseinrichtung 401 ist wieder ein Elektromagnet. Die Durchmischung erfolgt wieder durch ein Einschalten und ein nachfolgendes Ausschalten des Elektromagneten.

Daran anschließend wird die Kolbenstange des Zylinders 402 wieder eingefahren. Dadurch wird die Durchmischungseinrichtung 401 schräg nach oben angehoben und damit seitlich wegbewegt. Dadurch ist nachfolgend nach dem Erreichen der Ruheposition der Durchmischungseinrichtung wieder ein ungehinderter Zugang der Greifvorrichtung zu dem Vorratsbehälter 403 möglich.

## Patentansprüche

1. Vorrichtung zum Greifen länglicher Befestigungselemente aus einem ungeordneten Lager,
**dadurch gekennzeichnet, dass** die Vorrichtung aufweist:
> eine Greifvorrichtung mit zwei länglichen Greifelementen (1),
> einen Betätigungsmechanismus zur automatisierten Betätigung der beiden Greifelemente (1),
> ein Kamerasystem,
> eine Einrichtung (309) zur Bildauswertung zur Erkennung der Position und Orientierung der länglichen Befestigungselemente in dem ungeordneten Lager,
> eine Regel- oder Steuereinrichtung mit Ansteuermitteln zur Ansteuerung einer Positioniereinheit für die Greifvorrichtung sowie Ansteuermitteln für den Betätigungsmechanismus zur automatischen Betätigung der beiden Greifelemente (1) zur Steuerung des Öffnens und Schließens der beiden Greifelemente (1) abhängig von der erkannten Position und Orientierung der länglichen Befestigungselemente in dem ungeordneten Lager,
> wobei die beiden Greifelemente (1) über den Betätigungsmechanismus öffnbar und schließbar sind,
> wobei die beiden Greifelemente (1) jeweils einen Greifbereich (3) aufweisen derart, dass diese beiden Greifbereiche (3) beim Schließen der beiden Greifelemente (1) aufeinander zu bewegt werden, so dass diese in der geschlossenen Stellung ein in dem Greifbereich (3) befindliches längliches Befestigungselement (4) kraftschlüssig greifen,
> wobei die beiden Greifelemente (1) jeweils eine Abrückfläche (6) aufweisen derart, dass durch die Berührungslinie des Greifbereiches (3) mit der Abrückfläche (6) die vordere Kante des Greifelementes (1) gebildet wird, wobei die beiden Greifelemente (1) weiterhin wie folgt geformt sind:
> die Greifbereiche (3) weisen im Bereich des vorderen Endes des jeweiligen Greifelementes (1) eine halbrunde Ausnehmung (4) auf, wobei die Längsachse der halbrunden Ausnehmung (4) senkrecht zur Längsrichtung des Greifelementes (1) orientiert ist,
> die Abrückfläche (6) verläuft ausgehend von der vorderen Kante des Greifelementes (1) stetig differenzierbar so, dass die Abrückfläche (6) von dem Greifbereich (3) des Greifelementes (1) weg geneigt ist.

2. Vorrichtung nach Anspruch 1,
**dadurch gekennzeichnet, dass** der Greifbereich der beiden Greifelemente (1) weiterhin eine halbrunde Ausnehmung (5) aufweist, deren Längsachse parallel zur Längsrichtung des Greifelementes (1) orientiert ist.

3. Vorrichtung nach Anspruch 1 oder 2,
**dadurch gekennzeichnet, dass** der stetig differenzierbare Verlauf der Abrückfläche (6) konvex ist bei einer Draufsicht auf die Abrückfläche (6).

4. Vorrichtung nach einem der Ansprüche 1 bis 3,
**dadurch gekennzeichnet, dass** die Vorrichtung eine Durchmischungseinrichtung zur Ausführung eines Mischungsvorgangs in dem ungeordneten Lager der länglichen Befestigungselemente aufweist.

5. Vorrichtung nach Anspruch 4,
**dadurch gekennzeichnet, dass** die Durchmischungseinrichtung von einem Steuersignal der Einrichtung der Bildauswertung ansteuerbar ist.
